# EUROPEAN PATENT APPLICATION

(11) **EP 4 745 548 A1**
(43) Date of publication of application: **20.05.2026**
(21) Application number: 24213301.5
(22) Date of filing: 15.11.2024
(51) Int. Cl.: G01L 19/00, B01J 3/00, G06F 30/27

(54) **3D MODELLING OF PRESSURE FLOWS IN A PROCESSING CHAMBER**

(71) Applicant: VAT Holding AG, 9469 Haag (CH)
(72) Inventor: BALON, Frantisek, 9475 Sevelen (CH); KUZMINYKH, Yuri, 8820 Wädenswil (CH); MAYRHOFER, Dominic, 9000 St. Gallen (CH)
(74) Representative: Kaminski Harmann

(57) **Abstract**

The invention pertains to a computer-implemented method (100) for determining pressure in a region of interest of a processing chamber, the processing chamber comprising a support structure to support an object to be processed in the processing chamber, at least one controllable fluid inlet and at least one controllable fluid outlet, and a set of pressure sensors, the set of pressure sensors comprising a plurality of pressure sensors. The method comprises providing (115) a digital model of the processing chamber, performing a training process (120) comprising applying a defined variation of chamber pressures by varying a fluid flow in the processing chamber, and acquiring (126) a series of pressure values by means of the set of pressure sensors during the variation of chamber pressure, deriving (130), based on the digital model of the processing chamber and on the series of pressure values, a three-dimensional pressure distribution model, the pressure distribution model providing information about pressure at least in the region of interest, and performing a pressure determining process for determining a pressure of interest that is related to the region of interest, the determining process comprising measuring (150) one or more pressure values by means of a subset of the plurality of pressure sensors, and determining (160), based on the 3D pressure distribution model and the one or more pressure values, the pressure of interest.

## Description

The present invention pertains to a computer-implemented method for determining pressure in a region of interest of a processing chamber. Pressure flows in the processing chamber are modelled in a training process using a plurality of pressure sensors, so that during a processing application in the processing chamber, the pressure in the region of interest may be determined using only a subset of these pressure sensors, e.g., only a single pressure sensor.

Vacuum applications are typically performed in vacuum chamber systems. These applications are performed e.g. in the area of IC, semiconductor or substrate fabrication, which must take place in a protected atmosphere in the absence of contaminating particles.

For instance, DE 10 2023 001 573 B3 discloses a vacuum system for processing an object. The vacuum system comprises an evacuatable vacuum chamber, which is configured for receiving semiconductor elements or substrates to be processed or produced. The chamber comprises at least one opening, through which the semiconductor elements or other substrates can be guided into and out of the vacuum chamber. For example, in a production plant for semiconductor wafers or liquid crystal substrates, highly sensitive semiconductor or liquid crystal elements pass sequentially through several process vacuum chambers, in which the parts located within the process vacuum chambers are processed by means of a processing device. Two vacuum valves and a pressure sensor allow adjusting the pressure in the vacuum chamber.

Pressure sensors can only determine pressure at the position they are measuring. However, pressure may vary in the vacuum chamber during fluid flow, i.e., when the vacuum valves are controlled to allow fluid flow into and/or out of the processing chamber. It would be desirable to determine pressure directly in a region of interest of the vacuum chamber, i.e., where the object to be processed in positioned. However, it is difficult and troublesome to position a pressure sensor at the region of interest, i.e., next to the object. On the one hand, the presence of the sensor could negatively affect the processing of the object. On the other hand, the process conditions at the region of interest and also the presence of the object could affect the readings of the sensor.

It is therefore an object of the present invention to provide an improved method of determining the pressure in a region of interest of a vacuum chamber while an object is being processed in this region of interest.

It is a particular object to provide such a method without the need for directly measuring the pressure values collected in the region of interest while the object is being processed.

At least one of these objects is achieved by the computer-implemented method according to claim 1, the system of claim 11 and/or the dependent claims of the present invention.

A first aspect of the invention pertains to a computer-implemented method for determining pressure in a region of interest of a processing chamber. The processing chamber comprises a support structure to support an object to be processed in the processing chamber, at least one controllable fluid inlet, at least one controllable fluid outlet, and a set of pressure sensors, the set of pressure sensors comprising a plurality of pressure sensors.

The method comprises providing a digital model of the processing chamber and performing a training process, which comprises:
- applying a defined variation of chamber pressures by varying a fluid flow in the processing chamber, wherein varying the fluid flow comprises providing at least one defined fluid flow into the processing chamber by the at least one fluid inlet, and providing at least one defined fluid flow out of the processing chamber by the at least one fluid outlet, and
- acquiring a series of pressure values by means of the set of pressure sensors during the variation of chamber pressure.

The method then comprises deriving, based on the digital model of the processing chamber and on the acquired series of pressure values, a three-dimensional pressure distribution model that provides information about pressure at least in the region of interest. The method further comprises performing a pressure determining process for determining a pressure of interest that is related to the region of interest. The determining process comprises:
- measuring one or more pressure values by means of a subset of the plurality of pressure sensors; and
- determining, based on the 3D pressure distribution model and the one or more pressure values, the pressure of interest.

According to some embodiments of the method, the subset of pressure sensors comprises fewer pressure sensors than the set of pressure sensors. For instance, the subset of pressure sensors may comprise exactly one pressure sensor. Optionally, the method comprises "blanking" - e.g., shutting-off or physically removing - one or more of the pressure sensors of the set of pressure sensors from the processing chamber after finishing the training process.

According to some embodiments of the method, none of the pressure sensors of the subset of pressure sensors is positioned in the region of interest. In some embodiments also none of the pressure sensors of the set of pressure sensors is positioned in the region of interest.

According to some embodiments of the method, the one or more pressure values are measured in a first region of the processing chamber, the first region being related to a spatial arrangement of the subset of pressure sensors, the region of interest being different from the first region.

According to some embodiments of the method, the set of pressure sensors comprises at least a first pressure sensor and a second pressure sensor, the series of pressure values is acquired by the first and the second pressure sensor, and the pressure distribution model is derived by processing pressure information of the first and the second pressure sensor.

In some embodiments, the first pressure sensor is arranged at a first position related to a first region of the pressure chamber (wherein the first region is different from the region of interest), the one or more pressure values are measured with only the first pressure sensor. In these embodiments, determining the pressure of interest comprises processing the one or more pressure values and the pressure distribution model and deriving the pressure of interest based on the processing of the one or more pressure values and the pressure distribution model.

In some embodiments, the second pressure sensor is not part of the subset of pressure sensors, particularly wherein, after performing the training process, the second pressure sensor is "blanked", e.g., shut-off or physically removed from the processing chamber.

According to some embodiments of the method, acquiring the series of pressure values comprises each pressure sensor of the set of pressure sensors monitoring a change of pressure and providing an individual pressure profile based on the monitored change of pressure,

In some embodiments, deriving the pressure distribution model comprises comparing the individual pressure profiles provided by each of the pressure sensors and deriving a progression of pressure change through the processing chamber. For instance, the progression of pressure change may be derived by processing the individual pressure profiles and time information related to the training process.

Accordingto some embodiments of the method, the pressure of interest is related to a processing region in the processing chamber, the processing region comprising at least in part the support structure, in particular wherein the processing region is the region of interest.

According to some embodiments, the method comprises a predictive-maintenance process comprising determining, based on the one or more pressure values, a deviation from the pressure distribution model, and predicting, based on the deviation, a need for maintenance of the processing chamber or a component (e.g., a valve or a pump) thereof. Predicting the need for maintenance may comprise identifying a fault of a component of the processing chamber. Optionally, during said predictive maintenance process, the one or more pressure values are measured by means of the set of pressure sensors.

According to some embodiments, the method comprises a chamber-matching process comprising comparing the pressure distribution model with pressure distribution models of other processing chambers (e.g., with pressure distribution models of identical or basically identical processing chambers), and identifying, based on the comparison, a problem with a component (e.g., a valve or a pump) of the processing chamber.

A second aspect of the invention pertains to a vacuum processing system comprising a processing chamber and a controller.

The processing chamber comprises:
- a support structure to support an object to be processed in the processing chamber,
- at least one controllable fluid inlet and at least one controllable fluid outlet, and
- a set of pressure sensors, the set of pressure sensors comprising a plurality of pressure sensors.

The controller is configured to determine a pressure of interest in a region of interest of the processing chamber by:
- processing a three-dimensional pressure distribution model of the processing chamber, the pressure distribution model providing information about pressure in at least one defined region of the processing chamber,
- measuring one or more pressure values by means of at least a subset of the plurality of pressure sensors, and
- determining the pressure of interest based on the pressure distribution model and the one or more pressure values.

Accordingto some embodiments of the system, the controller is configured to derive the pressure distribution model, wherein deriving the pressure distribution model comprises performing a training process comprising:
- applying a defined variation of chamber pressures by varying a fluid flow in the processing chamber, wherein varying the fluid flow comprises providing at least one defined fluid flow into the processing chamber by the at least one fluid inlet, and providing at least one defined fluid flow out of the processing chamber by the at least one fluid outlet, and
- acquiring a series of pressure values by means of the set of pressure sensors during the variation of chamber pressure.

Deriving the pressure distribution model further comprises processing a digital model of the processing chamber together with the series of pressure values and deriving the pressure distribution model based on the processing of the digital model and the series of pressure values.

According to some embodiments of the system, the controller is configured to control the measuring of the one or more pressure values at a position or region different from the region of interest, in particular wherein none of the pressure sensors of the subset of pressure sensors is arranged in the region of interest.

According to some embodiments of the system, the controller is configured to perform and control
- performing the training process (120),
- deriving (130) the pressure distribution model (13), and
- determining (160) the pressure of interest (16)
according to the method of the first aspect of the invention.

A third aspect of the invention pertains to a computer program product stored on a machine-readable carrier, in particular stored in a controller of a system according to the second aspect of the invention, or embodied by an electromagnetic wave with a program code segment, with program code for performing or controlling a method accordingto the first aspect of the invention, wherein the computer program product comprises computer-executable instructions for performing said method, in particular wherein the computer program product is configured such that when it is executed, the steps of the method are performed automatically.

The invention in the following will be described in detail by referring to exemplary embodiments that are accompanied by figures, in which:
- Fig. 1: illustrates a first embodiment of a vacuum processing system according to the invention;
- Fig. 2: illustrates a second embodiment of a vacuum processing system according to the invention;
- Fig. 3: illustrates a first embodiment of a method according to the invention;
- Fig. 4: illustrates deriving a pressure profile in a region of interest based on a plurality of measured pressure profiles;
- Fig. 5: shows the inputs and outputs of a control unit; and
- Fig. 6: illustrates the data flow in a control unit performing the method.

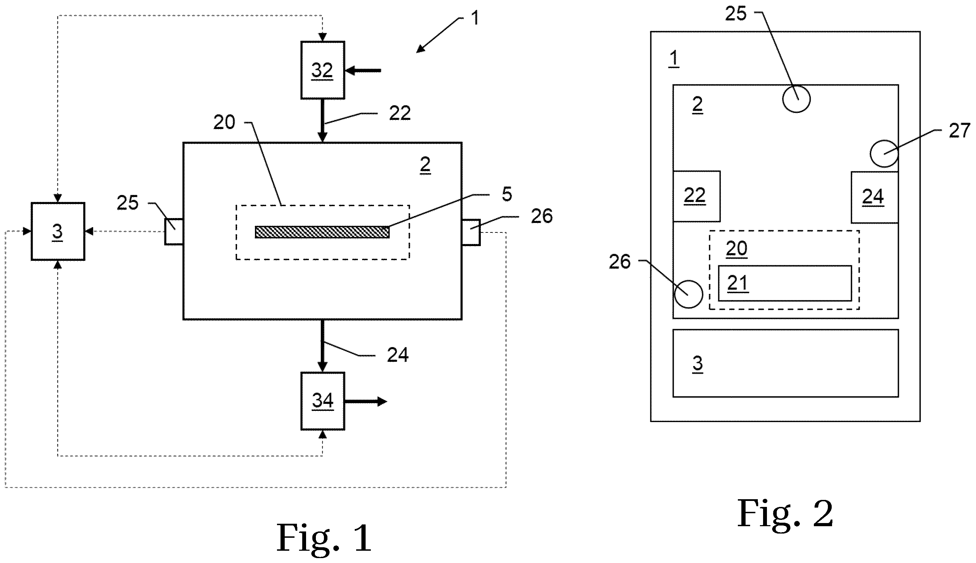

Figure 1 schematically shows a structure of a first embodiment of a vacuum processing system 1 according to the invention for processing an object 5, e.g. a semiconductor wafer, under vacuum conditions. The structure has a vacuum volume 2 (processing chamber), a first vacuum valve 32 and a second vacuum valve 24. A fluid inlet 22 connects the processing chamber 2 to the first vacuum valve 32 and a fluid outlet 24 connects the processing chamber 2 to the second vacuum valve 34.

The first vacuum valve 32 may be an (upstream) ventilation valve and provides a mass or volume inflow of a fluid into the chamber 2 when the valve 32 is opened. The vacuum valve 32 is designed as a regulating valve and thus enables a controlled setting of an opening cross-section and thus the setting of a quantity of fluid flowing through the valve 32 per time unit. The fluid can be a process gas, a precursor gas or an (inert) gas used to flush the chamber 2, for example. The fluid source can be provided as a tank or with a mass flow controller (MFC).

The second vacuum valve 34 may be a (downstream) evacuation valve and provides a mass or volume outflow of a fluid from the chamber when the valve 34 is opened. The vacuum valve 34 is also designed as a regulating valve and thus also enables a controlled setting of an opening cross-section and thus the setting of a quantity of fluid flowing through the valve 34 per unit of time. In addition to the connection to the volume 2, the second vacuum valve 34 is preferably connected to a vacuum pump and thus provides for pumping fluid out of the volume 2. Compared to a simpler "on/off" valve, a vacuum regulating valve offers the advantage that the respective flows can be set very precisely by such a valve. In conjunction with the present invention, this can provide further improved regulation of the internal chamber pressure.

The vacuum system 1 also comprises pressure sensors 25, 26. The pressure sensors 25 and 26 are connected to the vacuum volume 2 in such a way that a current actual pressure in the vacuum volume 2 can be determined by means of the sensors 25, 26.

The vacuum system 1 also has a control unit 3. The control unit 3 is connected to the pressure sensors 25 and 26, the first vacuum valve 32 and the second vacuum valve 34.

The connection with the pressure sensor 25 is preferably monodirectional, i.e. the control unit 3 receives the pressure information provided by the pressure sensor 25. The connections with the two valves 32 and 34, on the other hand, can be monodirectional or bidirectional, i.e. the valves 32 and 34 receive signals for controlling and changing the valve opening on the one hand, and on the other hand the connections can be designed so that the control unit 3 receives information from the respective valve, in particular information about an opening state.

The control unit 3 may be designed to regulate the actual pressure based on a predetermined target pressure for the vacuum volume 2. The predetermined target pressure defines a negative pressure range and a positive pressure range. The regulation of the actual pressure relates in particular to the regulation or control of the pressure in the vacuum volume for a processing process. The control unit 3 has a correspondingly configured regulation functionality for this purpose. The regulation functionality can be realized in particular as an algorithm or computer-implemented method. The actual pressure is regulated by continuously recording the actual pressure using the pressure sensor 25 and controlling the two valves 22 and 24 accordingly.

During fluid flow into or out of the chamber 2 (i.e., through one or both of the two valves 22 and 24), pressure inside the chamber varies depending on the position in the chamber, e.g., relative to the valves 22, 24. Whereas regarding a target pressure, the three-dimensional region of interest 20 is around the object 5 to be processed (the processing area), the pressure sensors 25, 26 are positioned out of the processing area, and, thus, cannot measure pressure in the region of interest 20 directly. Consequently, the control unit 3 is configured to perform a method according to the invention for determining pressure in the region of interest 20.

Figure 2 schematically shows a structure of a second embodiment of a vacuum processing system 1 accordingto the invention. As already described with respect to Figure 1, the system comprises a processing chamber 2 and a control unit 3. The chamber 2 comprises a support structure 21 to support an object to be processed in the processing chamber. A fluid inlet 22 and a fluid outlet 24 that are controllable by the control unit and a set of pressure sensors 25, 26, 27 are provided as part of the processing chamber 2. The control unit 3 is configured to receive measured pressure values from the sensors 25, 26, 27 and to control fluid flow into the processing chamber through the fluid inlet 22, and fluid flow out of the processing chamber through the fluid outlet 24.

For many applications, to control the gas pressure with high precision at the area around the wafer or other object during processing (processing area). To allow this pressure control, it is necessary to know the gas pressure at the processing area.

In the shown processing chamber, the region of interest regarding pressure is thus around the support structure 21. However, no pressure sensors are provided in this region, since using a pressure sensor at the support structure 21 is not feasible (at least during processing).

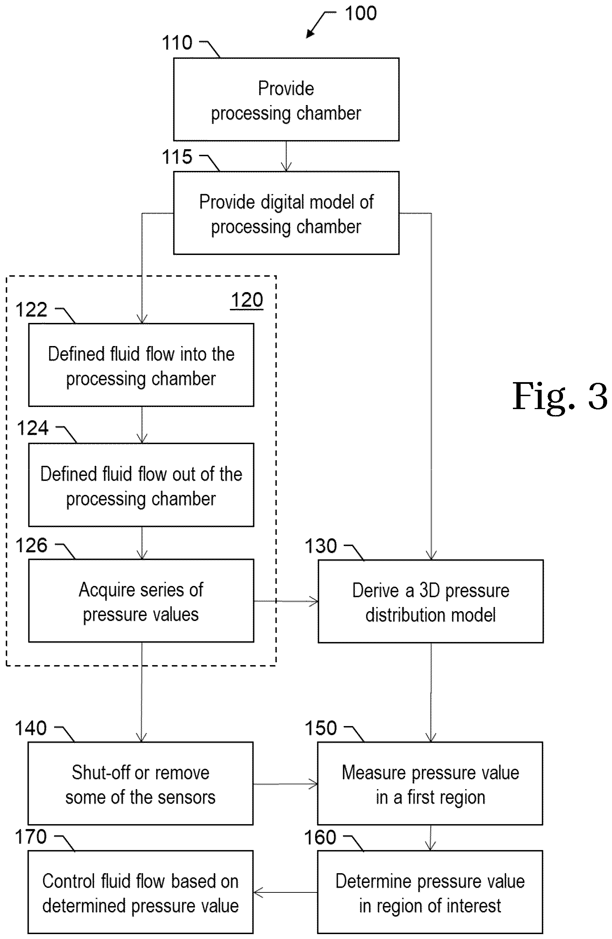

Figure 3 is a flow chart illustrating an exemplary embodiment of a method 100 according to the invention. In a first step, a processing chamber is provided 110. For instance, this processing chamber can be one of those described above in Figures 1 and 2. Next, a digital model of this processing chamber is provided 115. For instance, the digital model can be a digital twin. The digital model comprises at least a 3D configuration of the processing chamber as well as information about the fluid inlets and outlets and the positions of the pressure sensors. Providing the digital model may comprise generating the digital model, e.g., by a control unit of a vacuum processing system comprising the processing chamber.

According to the invention, the method 100 comprises a training process 120 using a multitude of pressure sensors, i.e., at least two pressure sensors of the processing chamber.

The training process 120 comprises providing 122 a defined fluid flow into the processing chamber and/or providing 124 a defined fluid flow out of the processing chamber. Providing 122, 124 the defined fluid flows, for instance may include directly defining and measuring a gas inlet and defining a valve position for a gas outlet. Since the gas outlet flow can be calculated from the gas inlet and the pressure change in the chamber, the gas outlet does not need to be measured directly. During these fluid flows, a series of pressure values is acquired 126 by each of the involved pressure sensors. Based on the acquired pressure values and on the digital model of the processing chamber, a pressure distribution model can be derived 130 that provides information about a three-dimensional distribution of pressure within the processing chamber. Using a larger number of pressure sensors for the training 120 and carefully selecting their distribution in the chamber, i.e., their relative positions in three dimensions, increases the precision of the pressure distribution model.

Optionally, acquiring 126 the series of pressure values comprises each pressure sensor monitoring a change of pressure and providing an individual pressure profile based on the monitored change of pressure. In that case, deriving 130 the pressure distribution model comprises comparing the individual pressure profiles provided by each of the pressure sensors in combination with a physical model and deriving a progression of pressure change through the processing chamber. For instance, the progression of pressure change can be derived by processing the individual pressure profiles and time information related to the training process.

After the training process 120 has been finished, a subset of pressure sensors can be shut-off or physically removed 140 ("blanked"). If the set of pressure sensors used during the training includes pressure sensors that are positioned in the region of interest, e.g., at a support structure that supports an object during processing, then at least these pressure sensors are blanked.

During the processing of an object in the processing chamber, pressure values are measured 150 with the reduced number of pressure sensors-for instance, with only one single pressure sensor- in a first region of the processing chamber that is not a region of interest.

Using the pressure distribution model and the measured pressure values of the first region, pressure values in the region of interest may be determined 160 without havingto measure them directly. Based on the determined pressure values, the fluid flows may then be controlled 170, e.g., to provide a certain pressure value in the region of interest.

Optionally, the method may be used for predictive maintenance. In that case, all pressure sensors can be used during the processing of the object to measure the pressure. For instance, the step 140 of blanking pressure sensors may be omitted, or blanked pressure sensors occasionally may be turned on again (e.g., once a week or once in every 100^{th} process). This allows determining deviations from the pressure distribution model, which can be used to determine early fault of the system such as decreased pumping speed of the pump and required service. Also, chamber-to-chamber matching can be performed. This may include comparing the pressure distribution models of multiple processing chambers, identifying issues among them and relating these issues to processes or hardware components.

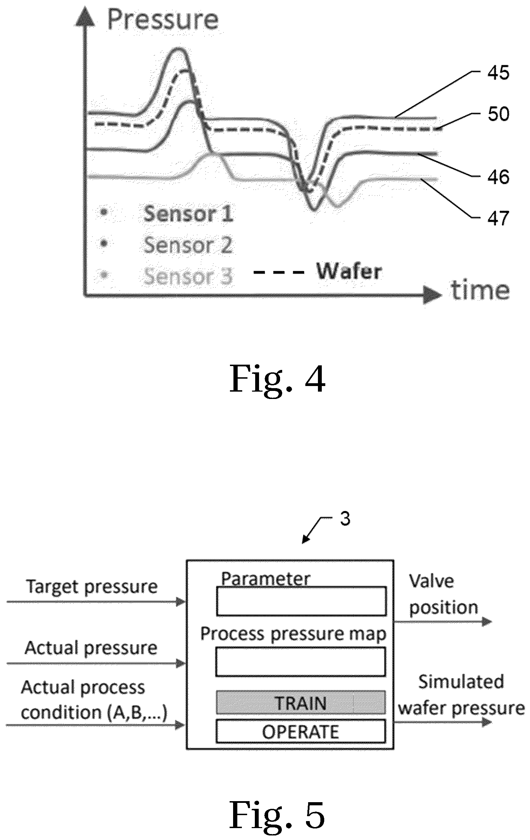

Figure 4 illustrates deriving the pressure at the processing area (wafer level) based on pressure measured in other regions of the processing chamber. To be able to efficiently control the gas pressure at the processing area, a method according to the invention comprises a pressure distribution model being generated by a physical modelling merged with recorded process data. The approach comprises a control unit:
- generating a physical model of the system,
- recording pressure data from pressure sensors mounted at different chamber locations during process training,
- merging the physical model with the recorded pressure data to build a pressure distribution model of the chamber, and
- using the pressure distribution model to control the pressure in the processing area.

The shown diagram shows three curves 45, 46, 47 representing pressure values measured over a certain time period by three pressure sensors distributed in the processing chamber. Acquiring the series of pressure values during training may comprise each pressure sensor monitoring a change of pressure and providing such an individual pressure profile 45, 46, 47 based on the monitored change of pressure.

A fourth curve 50 represents the pressure values determined for a region of interest, i.e. the processing area of a wafer or other object. Together, these pressure values, which are derived based on the measured pressure values 45, 46, 47 and based on a physical model of the processing system, produce a pressure profile 50 related to the region of interest.

In some embodiments, a pressure sensor that is provided in the region of interest may be used during the training and be switched off or removed (blanked) afterwards, since it cannot be used during the processing of the object (e.g., wafer). In other embodiments, also during the training no pressure sensor is provided in the region of interest.

Figure 5 illustrates the inputs and outputs of a control unit 3 of an exemplary embodiment of a processing system according to the invention. The inputs comprise actual pressure. The actual pressure comprises those pressures measured during the training by a set of pressure sensors (e.g., three sensors) and those pressures measured during the processing by a subset of the pressure sensors (e.g., one sensor). The inputs also comprise a target pressure for the area of interest (processing area of the wafer) and a current process, e.g., the current processing step and the processing recipe. The outputs comprise the simulated pressure at the processing area of the wafer and/or positions for the systems valve in order to change the pressure at the processing area of the wafer to match the target pressure.

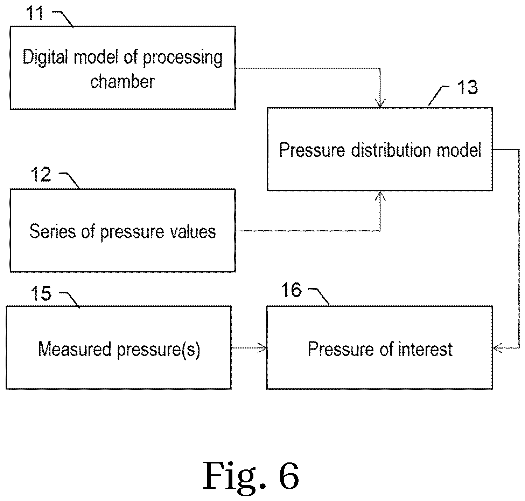

Figure 6 schematically illustrates the data flow in a control unit during an exemplary embodiment of a method according to the invention. A digital model 11 of the processing chamber is provided to the control unit. During the training, a series of pressure values 12 is generated by the pressure sensors and provided to the control unit. Based on the digital model 11 and the series of pressure values 12, the control unit generates a pressure distribution model 13. During processing of a wafer (or other object) in the chamber, pressures are measured by (at least) a subset of the pressure sensors. These measured pressures 15 are provided to the control unit. Based on the pressure distribution model 13 and on the measured pressures 15, the control unit calculates the pressure of interest 16 associated with the region of interest, i.e. the processing area around the wafer.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for determining pressure in a region of interest (20) of a processing chamber (2), the processing chamber comprising
- a support structure (21) to support an object (5) to be processed in the processing chamber,
- at least one controllable fluid inlet (22) and at least one controllable fluid outlet (24), and
- a set of pressure sensors, the set of pressure sensors comprising a plurality of pressure sensors (25, 26, 27),
the method (100) comprising
- providing (115) a digital model (11) of the processing chamber (2);
- performing a training process (120) comprising
- applying a defined variation of chamber pressures by varying a fluid flow in the processing chamber (10), wherein varying the fluid flow comprises providing (122) at least one defined fluid flow into the processing chamber by the at least one fluid inlet (22), and providing (124) at least one defined fluid flow out of the processing chamber by the at least one fluid outlet (24), and
- acquiring (126) a series of pressure values (12) by means of the set of pressure sensors during the variation of chamber pressure;
- deriving (130), based on the digital model (11) of the processing chamber and on the series of pressure values (12), a three-dimensional pressure distribution model (13), the pressure distribution model providing information about pressure at least in the region of interest (20); and
- performing a pressure determining process for determining a pressure of interest (16) that is related to the region of interest (20), the determining process comprising
- measuring (150) one or more pressure values (15) by means of a subset of the plurality of pressure sensors (25, 26, 27); and
- determining (160), based on the pressure distribution model (13) and the one or more pressure values (15), the pressure of interest (16).

2. Method (100) according to claim 1, wherein the subset of pressure sensors comprises fewer pressure sensors than the set of pressure sensors.

3. Method (100) according to claim 1 or claim 2, wherein none of the pressure sensors of the subset of pressure sensors is positioned in the region of interest (20).

4. Method (100) according to any one of the preceding claims, wherein the one or more pressure values (15) are measured (140) in a first region of the processing chamber, the first region being related to a spatial arrangement of the subset of pressure sensors, the region of interest (20) being different from the first region.

5. Method (100) according to any one of the preceding claims, wherein
- the set of pressure sensors comprises at least a first pressure sensor (25) and a second pressure sensor (26);
- the series of pressure values (12) is acquired (126) by the first and the second pressure sensor (25, 26); and
- the pressure distribution model (13) is derived (130) by processing pressure information of the first and the second pressure sensor (25, 26).

6. Method (100) according to claim 5, wherein the second pressure sensor (26) is not part of the subset of pressure sensors.

7. Method (100) according to any one of the preceding claims, wherein acquiring (126) the series of pressure values (12) comprises each pressure sensor (25, 26, 27) of the set of pressure sensors monitoring a change of pressure and providing an individual pressure profile (45, 46, 47) based on the monitored change of pressure.

8. Method (100) according to any one of the preceding claims, wherein the pressure of interest (16) is related to a processing region in the processing chamber (2), the processing region comprising at least in part the support structure (21).

9. Method (100) according to any one of the preceding claims, comprising a predictive-maintenance process, the predictive-maintenance process comprising
- determining, based on the one or more pressure values (15), a deviation from the pressure distribution model (13), and
- predicting, based on the deviation, a need for maintenance of the processing chamber (2) or a component thereof.

10. Method (100) according to any one of the preceding claims, comprising a chamber-matching process, the chamber-matching process comprising
- comparing the pressure distribution model (13) with pressure distribution models of other processing chambers, and
- identifying, based on the comparison, a problem with a component of the processing chamber (2).

11. Vacuum processing system (1) comprising
- a processing chamber (2) comprising
- a support structure (21) to support an object (5) to be processed in the processing chamber,
- at least one controllable fluid inlet (22) and at least one controllable fluid outlet (24), and
- a set of pressure sensors, the set of pressure sensors comprising a plurality of pressure sensors (25, 26, 27); and
- a controller (3) configured to determine (160) a pressure of interest (16) in a region of interest (20) of the processing chamber (2) by
- processing a three-dimensional pressure distribution model (13) of the processing chamber (2), the pressure distribution model (13) providing information about pressure in at least one defined region of the processing chamber (2),
- measuring (150) one or more pressure values (15) by means of at least a subset of the plurality of pressure sensors; and
- determining (160) the pressure of interest (16) based on the pressure distribution model (13) and the one or more pressure values (15).

12. Vacuum processing system (1) according to claim 11, wherein the controller (3) is configured to derive (130) the pressure distribution model (13), wherein deriving the pressure distribution model comprises
- performing a training process (120) comprising
- applying a defined variation of chamber pressures by varying a fluid flow in the processing chamber, wherein varying the fluid flow comprises providing (122) at least one defined fluid flow into the processing chamber (2) by the at least one fluid inlet (22), and providing (124) at least one defined fluid flow out of the processing chamber (2) by the at least one fluid outlet (24), and
- acquiring (126) a series of pressure values (12) by means of the set of pressure sensors during the variation of chamber pressure;
- processing a digital model (11) of the processing chamber (2) together with the series of pressure values (12); and
- deriving the pressure distribution model (13) based on the processing of the digital model (11) and the series of pressure values (12).

13. Vacuum processing system (1) according to claim 11 or claim 12, wherein the controller (3) is configured to control the measuring (150) of the one or more pressure values (15) at a position or region different from the region of interest (20).

14. Vacuum processing system (1) according to any one of claims 11 to 13, wherein the controller (3) is configured to perform and control
- performing the training process (120),
- deriving (130) the pressure distribution model (13), and
- determining (160) the pressure of interest (16)
according to the method (100) of any one of claims 1 to 10.

15. Computer program product stored on a machine-readable carrier or embodied by an electromagnetic wave with a program code segment, with program code for performing or controlling a method (100) according to any one of claims 1 to 10, wherein the computer program product comprises computer-executable instructions for performing the method according to any one of claims 1 to 10.
